# EUROPEAN PATENT APPLICATION

(11) **EP 1 009 125 A2**
(43) Date of publication of application: **14.06.2000**
(21) Application number: 99124327.0
(22) Date of filing: 06.12.1999
(51) Int. Cl.: H04L 7/033, H04J 3/06

(54) **Bit synchronization circuit oversampling received data to determine content thereof**

(30) Priority: 08.12.1998 JP 34810798
(71) Applicant: SHARP KABUSHIKI KAISHA, Osaka-shi, Osaka-fu 545-0013 (JP)
(72) Inventor: Ichikawa, Yuji, Tenri-shi, Nara (JP); Nakano, Daisuke, Tenri-shi, Nara (JP); Nishimura, Takashi, Tenri-shi, Nara (JP); Sumi, Kazuyuki, Nara-shi, Nara (JP); Ueda, Toru, Soraku-gun, Kyoto (JP)
(74) Representative: MÜLLER & HOFFMANN Patentanwälte

(57) **Abstract**

A bit synchronization circuit used in a receiver circuit for serial communication includes a sampling unit (101) which performs oversampling of a received signal at a sampling rate higher than bit rate to output the result of the sampling in parallel at a rate lower than the sampling rate, and a state machine (102) which determines and outputs the number of bits and content of received data based on sampled data supplied from the sampling unit (101) and internal state. The sampling unit (101) performs oversampling of a received signal at a sampling rate higher than bit rate so that synchronization with the received signal can be established at high-speed and correction to the synchronization can be made at each transition point of the received signal. Further, the sampling unit (101) and the state machine (102) can be configured of digital circuits and thus are suitable for mass production, If the sampling unit (101) performs oversampling using a group of multi-phase clocks, a bit synchronization circuit which requires no high-speed clock can be implemented.

## Description

### BACKGROUND OF THE INVENTION

### Field of the Invention

The present invention relates to a bit synchronization circuit used in a receiver for high-speed serial communication which is typically achieved by IEEE 1394, ATM (Asynchronous Transfer Mode) and the like. In particular, the invention relates to a bit synchronization circuit which performs oversampling of received data to determine content of the data.

### Description of the Background Art

As information equipment is digitized, high-speed serial communication of digital signals has been employed in a wide range of uses such as data transfer between LSIs, radio communication and optical fiber communication.

Digital communication requires transmission of timing information, in addition to data, for correctly sampling the data. In most examples of the high-speed serial communication, different lines are not used for transmitting timing information and data respectively in order to decrease the number of communication lines. Instead of using different lines, a coding method is employed according to which data is provided with redundancy to assure transition of the data within a predetermined time. In this case, transition of data itself serves as timing information. Therefore, if the interval between transitions is sufficiently short, the receiver can correctly regenerate data based on the transition of data. A circuit which implements this method is called bit synchronization circuit or symbol synchronization circuit.

In recent years, in the field of high-speed serial communication, development has been advanced in the system referred to as burst mode communication by which data is intermittently transmitted and received, such as the time division system for the two-wire subscriber line system in ISDN (Integrated Services Digital Network) and other half duplex communications. In the burst mode communication, in order to establish bit synchronization, a particular pattern which is called preamble is usually transferred before sending data to be transferred. During transfer of the preamble, the data to be transferred cannot be sent. Therefore, the shorter the preamble, the more efficient the communication is. In order to shorten the preamble, technique of the bit synchronization circuit is important which achieves synchronization speedily.

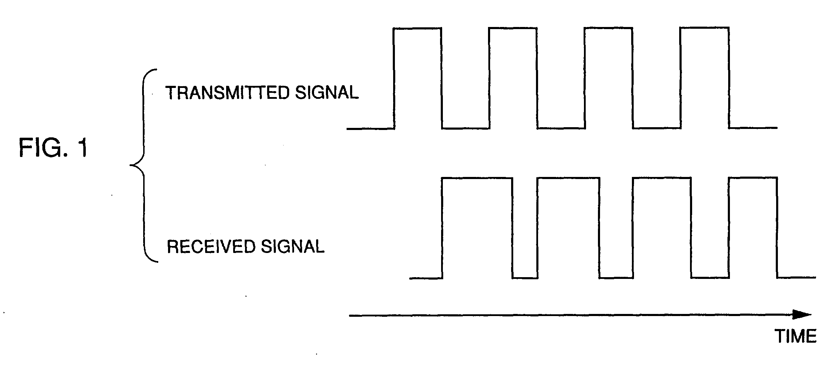

Regarding those systems such as the optical fiber communication and radio communication which use an amplifier to convert a signal, the pulse width of the signal is not constant until the amplifier becomes stable. Fig. 1 illustrates this phenomenon. The transmitted signal is represented by change of an output of a transmitter relative to time. In Fig. 1, a typically used repeated pattern of 0s and 1s is used as a preamble. In the optical fiber communication, for example, an optical signal is output by an LED or a laser based on this transmitted signal. The received signal shown in Fig. 1 illustrates one example of a signal produced by receiving an optical signal by a photoreceiver device and amplifying the signal. Depending on characteristics of an amplifier or the like, at the leading portion of the received signal, the period of high level is longer and the period of low level is shorter compared with the transmitted signal. This tendency gradually disappears as the receiving operation continues and consequently, the waveform of the received signal becomes close to the waveform of the transmitted signal. In order to avoid the influence of the unequal pulse width of the received signal, a further preamble should be added. The bit synchronization circuit accordingly plays an important role in coping with such a situation which is capable of establishing a correct synchronization even if the pulse width is not constant.

The following six methods are known as conventional arts for establishing bit synchronization.

The first method uses PLL (Phase-Locked Loops) as described in "Phase-Locked Loops - DESIGN, SIMULATION, & APPLICATIONS," Third Edition, Roland E. Best, 1997, McGraw-Hill. According to this method, a voltage-controlled oscillator is employed for generating a clock on a receiver side. The voltage-controlled oscillator can change frequency of the clock to be output by changing operating voltage. In the PLL, phase difference between a transition point of a received signal and that of a generated clock is utilized to control the frequency of the clock which is output from the voltage-controlled oscillator such that the transition point of the received signal and that of the clock match with each other. By sampling received data using the clock thus synchronized with the received signal, the data can correctly be received.

Generally, a bit synchronization circuit which generates on a receiver side a clock synchronized with a received signal is referred to as clock recovery system. When the clock recovery system is employed in the bit synchronization circuit, received data is synchronized with a clock which is synchronized with a received signal. Accordingly, in order to synchronize the received data with a system clock of the receiver, an asynchronous FIFO (First In First Out) is usually employed. A received signal is written into the asynchronous FIFO by using a clock which is in synchronism with the received signal and then the signal is read with a system clock of the receiver, so that reading of the signal can be synchronized with the system clock of the receiver.

According to the second method, data is sampled by using a clock which is sufficiently fast compared with bit rate so as to determine sampling timing for reception based on timing at which the value of the sampled data changes. UART (Universal Asynchronous Receiver and Transmitter) which is a serial controller of a PC Personal Computer). employs this method. The UART uses a data format which is called start/stop synchronization. According to the start/stop synchronization, usually a start bit and a stop bit are added respectively ahead of and behind data for each 8-bit data. The start bit is always "1" and the stop bit is always "0." A received signal is sampled with a clock which is sixteen times as fast as bit rate and a 4-bit counter is initialized when sampled data changes from 0 to 1, i.e. when the start bit begins. Sampled data obtained when the 4-bit counter attains 8 is stored 8 times, then it is confirmed that the following stop bit is 0, and the 8 sampled data are output as received data.

The third method is disclosed in Japanese Patent Laying-Open No. 6-53950. According to high and low levels of a received signal, operations of two oscillators are started alternately. The two oscillators thus start operations at rising or falling of the received signal respectively, so that outputs thereof are synchronized with the received signal. OR of the outputs of the two oscillators are determined to generate a clock which is synchronous with received data.

The asynchronous FIFO which is described in conjunction with the first method is also necessary in the third method.

According to the fourth method, a clock having its phase close to that of received data is selected from multi-phase clocks, i.e. a plurality of clocks having phases shifted from each other (Japanese Patent Laying-Open No. 7-193562, Japanese Patent Laying-Open No. 9-181713 or Japanese Patent Laying-Open No. 10-247903). These publications disclose a method of selecting from multi-phase clocks a clock having its phase closest to a transition point of a received signal.

The asynchronous FIFO which is described in conjunction with the first method is also necessary in the fourth method.

According to the fifth method, the speed of the start/stop synchronization is enhanced. In this method, in order to achieve high-speed communication as 500 Mbps and enhance a parallel property, multi-phase clocks having their rate one-tenth as high as bit rate is used. Specifically, 40 one-tenth clocks having phases shifted by the same interval are employed. Data sampled with these clocks are sampled again with a single clock, and accordingly, information equivalent to the one achieved by sampling data at a rate four times as high as bit rate in 10-bit time can be obtained at an interval of 50 MHz.

Thus obtained data is input to an edge detection circuit so as to detect change from 0 to 1. Actually, it is supposed in this method that a preamble having a form of 1111100000 ahead of data to be sent is transmitted at least three times. When sampling is conducted in this period, just one portion, i.e. the leading section of the start bit changes from 0 to 1. The position of the start bit can thus be specified. Even if the preamble ends and transmission and reception of data starts, the edge of the start bit is always present at almost the same location. Therefore, a circuit is incorporated which ignores an edge within data and tracks only the edge of the start bit.

As described above, when data is being received, the position of the edge of the start bit can be specified and accordingly, the following four samples as a set, the next four samples as a set, and so on are each regarded to correspond to each bit. Value of each bit is decided by majority of associated four samples.

The sixth method is disclosed in Japanese Patent Laying-Open No. 9-36849. According to this method, a received signal is sampled at a rate higher than bit rate, resultant data is made into parallel at the same rate as the bit rate, and then the data is processed. Specifically, points of change are extracted from the parallel data and sampled data regarded as received data is selected based on the number and positions of the points of change within the parallel data.

The first method takes a long time for synchronization, and accordingly a long preamble ahead of data is necessary. Further, an analog circuit is included which makes difficult the mass production at low cost.

In the second method, if high-speed communication ranging from 100 Mbps to several Gbps is performed, a required clock is at least a few hundreds MHz and thus this method is not appropriate for implementation of a low cost CMOS LSI.

In the third method, the clock is instantaneously synchronized with the edge of data. Therefore, fluctuation of a received signal leads directly to fluctuation of a clock. If a considerable fluctuation occurs, high-speed operation is required of the asynchronous FIFO which is needed in the clock recovery system.

Generally, in a bit synchronization circuit of the clock recovery system synchronized with a received signal, a long preamble is necessary if synchronization is slow. If synchronization is fast, a high-speed FIFO is necessary and thus such a bit synchronization circuits has trade-off characteristics.

According to the fourth method, a clock is selected based on edge information of a received signal and the selected clock is used for sampling the received signal. Therefore, a precise adjustment is required concerning delay of a circuit which selects the clock. The adjustment of delay also leads to difficulty in production as the analogue circuit.

In general, according to the clock recovery system as the first, third and fourth methods, timing of sampling is uniquely determined based on the edge of a received signal. As a result, there is a high possibility of malfunction if the pulse widths of "0" and "1" tend to be close to either one of them.

According to the fifth method, only the transition from the stop bit to the start bit is tracked and transition in the data bit portion is not considered. In other words, the transition in the data bit portion is not utilized as timing information, and consequently correction to fluctuation of a received signal could become impossible. Further, because of the majority decision, if the pulse widths of "0" and "1" tend to be close to either one of them, there is no scheme to deal with this.

In the sixth method, output of received data is fixed relative to clock rate of a receiver. As a result, this method is not resistant to fluctuation and error of bit rate and thus it is difficult to keep synchronization for a long time.

According to the fifth method, a received signal which is not synchronous with multi-phase clocks is sampled. Usually a D flip-flop is used for the sampling. In order to normally operate the D flip-flop, input data should be maintained at a constant value for a predetermined period of time before and after the clock. In this predetermined period of time, if the input data does not have a constant value, output of the D flip-flop could have an unstable value which is not "0" or "1." This phenomenon is called metastability. As this metastability causes malfunction of a circuit, it is desirable to decrease the rate of occurrence thereof. In the fifth method, this problem is addressed by connecting sense amplifiers in 4-stage cascade form.

Those conventional methods respectively have drawbacks as discussed above. Achievement of bit synchronization which satisfies all of the following factors is then required.
a. High-speed synchronization is achieved.
b. Synchronization can be maintained.
c. There is no or are a few analogue portion(s).
d. High-speed asynchronous FIFO is not required.
e. High-speed clock is not required
f. High resistance to fluctuation of a received signal is assured.
g. Specific waveform with the pulse width different from the original one can be addressed.

### SUMMARY OF THE INVENTION

One object of the present invention is to provide a bit synchronization circuit which requires no high-speed clock and is capable of establishing quick synchronization with a received signal and making correction to the synchronization at each transition point of the received signal.

Another object of the present invention is to provide a bit synchronization circuit suitable for mass-production.

A further object of the present invention is to provide a bit synchronization method which requires no high-speed clock to establish quick synchronization with a received signal and enables correction to the synchronization at each transition point of the received signal.

According to one aspect of the invention, a bit synchronization circuit is used in a receiver circuit for serial communication. The bit synchronization circuit includes a sampling unit which performs oversampling of a received signal at a sampling rate higher than bit rate to output result of the sampling in parallel at a rate lower than the sampling rate, and a state machine which determines the number of bits and content of received data based on sampled data supplied from the sampling unit and internal state.

The sampling unit oversamples a received signal at a sampling rate higher than bit rate so that quick synchronization with the received signal is possible and correction to the synchronization can be made at each transition point of the received signal. Further, the sampling unit and the state machine can be configured of digital circuits which are suitable for mass-production. In addition, if the sampling unit is constructed such that it performs oversampling by using a group of multi-phase clocks, a bit synchronization circuit which does not require high-speed clock can be provided.

According to another aspect of the invention, a bit synchronization method is used in a receiver circuit for serial communication. The bit synchronization method includes the steps of oversampling a received signal at a sampling rate higher than bit rate, outputting result of the sampling in parallel at a rate lower than the sampling rate, and determining the number of bits and content of received data based on sampled data output in parallel and internal state.

A received signal undergoes oversampling at a sampling rate higher than bit rate, so that high-speed synchronization with the received signal is possible and correction to the synchronization can be made at each transition point of the received signal. By performing the oversampling using multi-phase clocks, a bit synchronization method which requires no high-speed clock can be provided.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 illustrates nonuniformity of pulse widths of a received signal.
Fig. 2 illustrates a structure of a bit synchronization circuit according to the present invention.
Fig. 3 illustrates a sampling unit shown in Fig. 2 in detail.
Fig. 4 is a timing chart for the sampling unit shown in Fig. 3.
Fig. 5 illustrates an operational principle of a state machine 102 in a first embodiment.
Fig. 6 illustrates a transition/output table of state machine 102 in the first embodiment.
Fig. 7 illustrates a structure of a bit synchronization circuit in a second embodiment.
Fig. 8 illustrates a sampling unit 101' in detail in a third embodiment.
Fig. 9 illustrates an operational principle of a state machine 102' in a fourth embodiment.
Fig. 10 illustrates a transition/output table of state machine 102' in the fourth embodiment.

### DESCRIPTION OF THE PREFERRED EMBODIMENTS

### First Embodiment

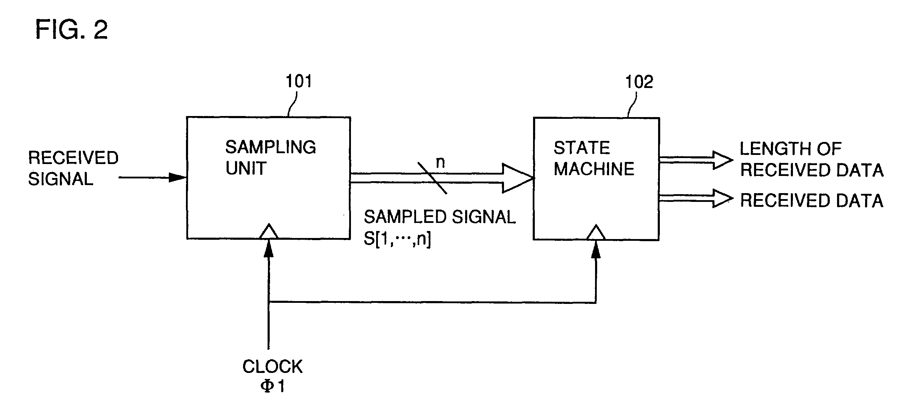

Fig. 2 illustrates a structure of a bit synchronization circuit in the first embodiment of the invention. The bit synchronization circuit includes a sampling unit 101 which samples a received signal and outputs the result of the sampling, and a state machine 102 which determines and outputs content and the number of bits of the sampled data supplied from sampling unit 101. A received signal and a clock Φ1 which is slower than a sampling rate are supplied to sampling unit 101. Sampling unit 101 uses any method to synchronize the result of the sampling of the received signal with clock Φ1 to output the result in parallel. This output is supplied to state machine 102. State machine 102 outputs the number of bits and content of data included in the sampled data.

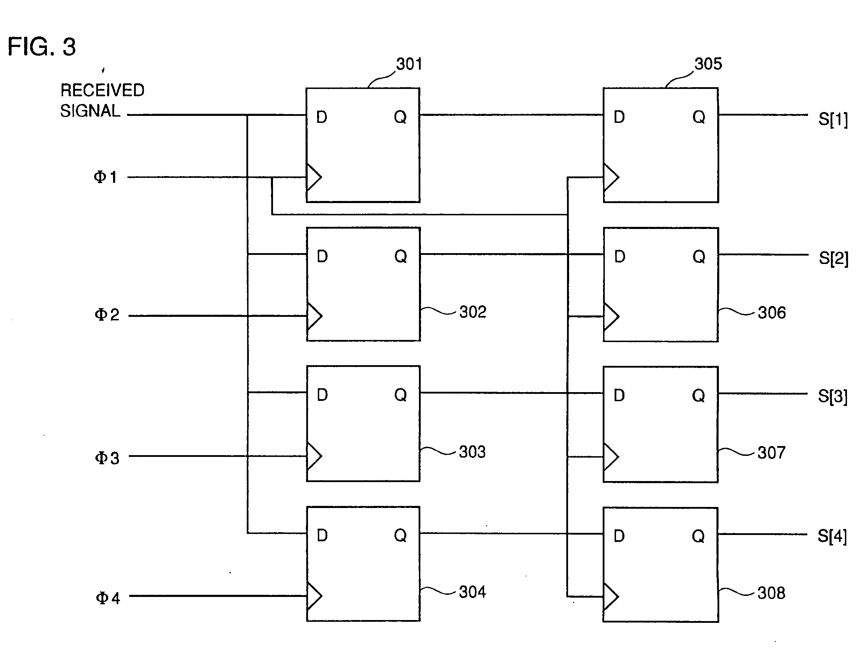

Fig. 3 illustrates one example of oversampling conducted by using multi-phase clocks at sampling unit 101 in Fig. 2. Here, the clock has the same frequency as that of bit rate and the sampling rate is four times as high as the bit rate for the purpose of description. However, these conditions are not necessarily fixed. A received signal and multi-phase clocks Φ1 to Φ4 are input respectively to four flip-flops 301 to 304 in the preceding stage (on the left side). The received signal is then sampled with four clocks having different phases respectively. The outputs of the flip-flops in the preceding stage are respectively input to flip-flops 305 to 308 in the subsequent stage (on the right side). Clock Φ1 is supplied to the flip-flops in the subsequent stage.

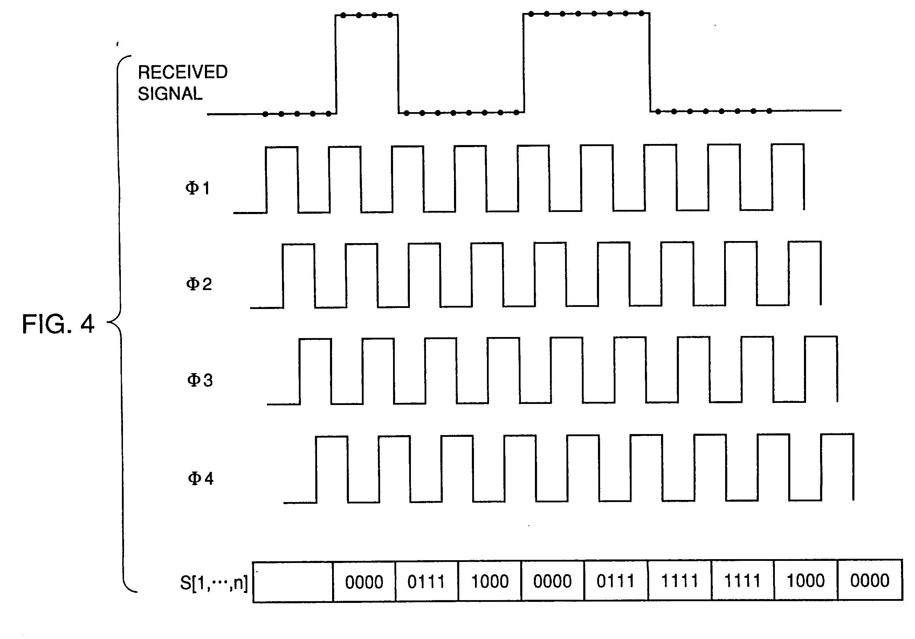

Fig. 4 illustrates operation timing of sampling unit 101. A received signal is sampled at the positions indicated by the black points on the received signal by using the multi-phase clocks Φ1 to Φ4. The result of the sampling is sampled again by using dock Φ1 and output, so that an output S [1, ..., n] of sampling unit 101 is synchronized with clock Φ1 to be output.

Description of state machine 102 is now presented. In order to illustrates an operation of the state machine in the embodiment of the present invention, description is first given on a state machine to which the result of sampling with four clocks of different phases is supplied one sample by one sample.

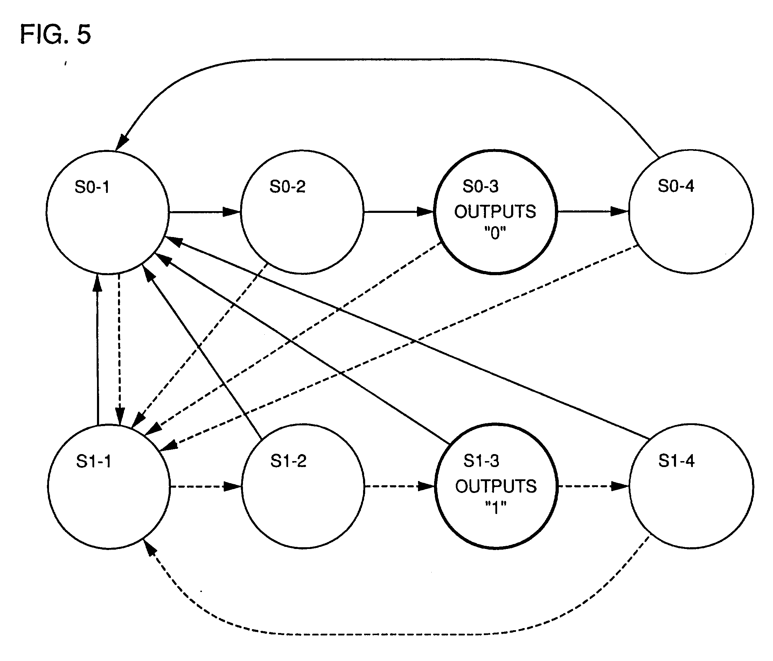

Fig. 5 illustrates a transition table of the state machine when result of sampling with four clocks of different phases is input one sample by one sample. The state machine has 8 states which are specifically S0-1, S0-2, S0-3, S0-4, S1-1, S1-2, S1-3 and S1-4. S0 and S1 respectively represent "0" and "1" as the states of a current bit. -1, -2, -3 and -4 each represent a position in one bit. Since the four clocks with phases different from each other are used, each sample corresponds to any of the four positions in one bit. In order of time, samples from the leading one correspond respectively to -1, -2, -3 and -4.

If the value of an input sample is "0," the state machine transits following the solid line. If a state is any of S0s, the state machine makes a transition to the one indicating the subsequent time among the positions of the bit. If the state is any of S1s, it makes transition to S0-1. From this transition, it is known that a received signal makes transition from 1" to "0" If the value of an input sample is "1," the state machine transits following the dotted line. This behavior is symmetrical to that of the machine to which a sample of "0" value is input.

When the sampled value of the received signal changes, the state machine always makes transition to S0-1 or S1-1. After this, if the following two samples have the same value, the state machine makes transition to S0-3 or S1-3 respectively. Bit synchronization is accordingly established by determining that data is received in these states.

In this embodiment, the state always makes transition to S1-1 or S0-1 when the sampled value changes, and thus bit synchronization is established each time the sampled value changes. As a result, bit synchronization which is resistant to fluctuation of the received signal is possible.

A clock which is four times as high as bit rate is required for operating the above described state machine. However, a state machine can be operated with a clock having the same frequency as that of the bit rate if the state machine is constructed such that sampled values are input for each 4-bit, the state makes transition after the 4-bit is input, and outputs which are obtained during the input of the 4-bit are output all together.

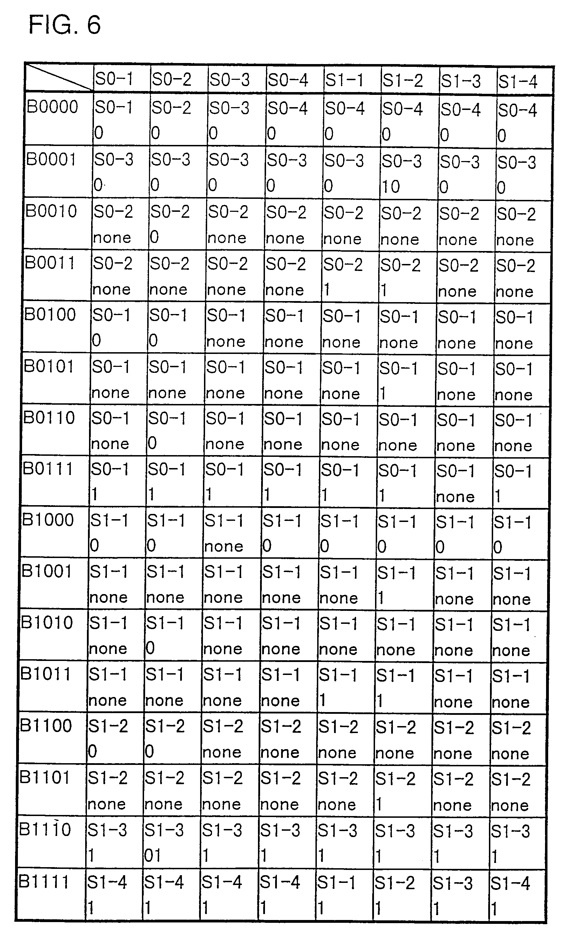

Fig. 6 is a transition table of a state machine which implements this. The leftmost column shows a list of sampled values S [1, ..., n] which are input. The sampled values are represented by binary numbers. The uppermost row shows a list of current states. In a crossing of a column of a current state and a row of an input sampled value, the next state and a bit pattern to be output are shown. Bit patterns to be output are none, 0, 1, 01 and 10 which represent respectively "no received bit," ""0" received (1 bit received)," ""1" received (1 bit received)," ""1" received following "0" (2 bits received)" and ""0" received following "1" (2 bits received)." For example, if the current state is S0-1 and the input sample is 0000, the next state is S0-1 and the received bit pattern is "0." According to this state machine transition table, the state machine processes four samples with one clock and thus the operation as shown in Fig. 5 can be implemented with a clock which is the same as bit rate.

As heretofore described, this embodiment can provide a bit synchronization circuit which needs no high-speed clock to quickly establish synchronization with a received signal and make correction to the synchronization at each transition point of the received signal. Further, the bit synchronization circuit is configured of digital circuits, and accordingly appropriate for mass-production.

### Second Embodiment

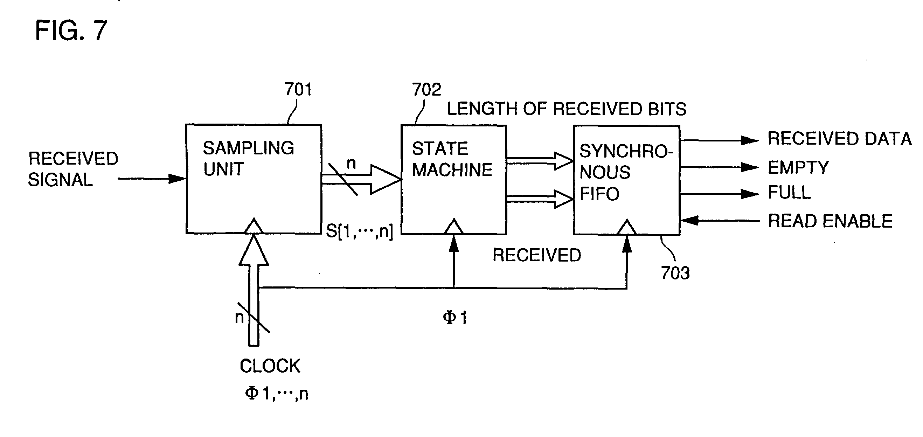

Fig. 7 illustrates a structure of a bit synchronization circuit in the second embodiment. The bit synchronization circuit includes a sampling unit 701 which samples a received signal and outputs the result of the sampling, a state machine 702 which determines and outputs content and the number of bits of the sampled data supplied from sampling unit 701, and a synchronous FIFO 703 to which the content of the sampled data supplied from state machine 702 is successively input. Sampling unit 701 and state machine 702 are identical to those illustrated in the first embodiment. As described in conjunction with the first embodiment, the outputs of the state machine are 0 bit, 1 bit and 2 bits in one clock as represented by the number of received bits. With such outputs, connection of a circuit which processes the outputs bit by bit is difficult. In the second embodiment, synchronous FIFO 703 is connected to the circuit of the first embodiment. A circuit connected to the bit synchronization circuit can restrict an output of the FIFO by controlling READ ENABLE signal shown in Fig. 7. Specifically, if an output of the bit synchronization circuit is 2-bit, READ ENABLE signal is activated, then data corresponding to the 2-bit is read, and thereafter READ ENABLE signal is inactivated. Received data in the period in which READ ENABLE signal is active is stored in synchronous FIFO 703 and accordingly the data is not lost. The output of state machine 702 has already been synchronized with the system clock of the receiver, and thus an asynchronous FIFO is unnecessary. Therefore, synchronous FIFO 703 may operate at a rate which is the same as bit rate.

As described above, the bit synchronization circuit in this embodiment enables a circuit connected thereto to read received data with a fixed length.

### Third Embodiment

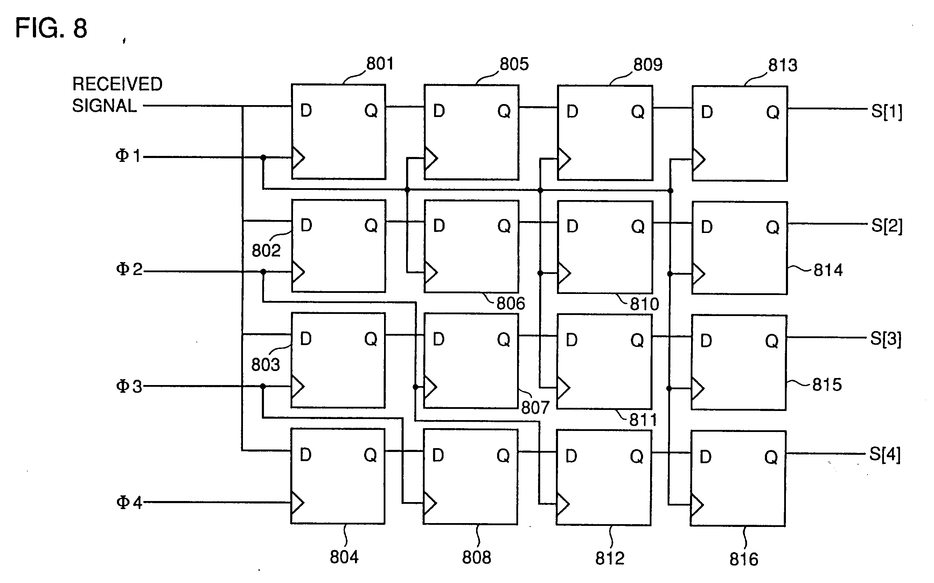

The third embodiment is different from the first embodiment only in that the sampling unit of the first embodiment shown in Fig. 3 is replaced with a sampling unit as shown in Fig. 8. The sampling unit of the third embodiment is hereinafter denoted by 101' for the purpose of description. As discussed above, when an asynchronous signal undergoes sampling by a D flip-flop, metastability could occur. In order to avoid the metastability, the following methods are employed in this embodiment.
1. Output of a D flip-flop is waited for a sufficient time to use it.
2. A signal is passed through a plurality of D flip-flops which are connected successively.

Fig. 8 illustrates a sampling circuit which incorporates both of the two methods above.

In sampling unit 101 of Fig. 3, D flip-flop 304 performs sampling using clock Φ4 and the result of the sampling is sampled again by using clock Φ1. In this case, the time required to the re-sampling is one-fourth of one bit time at a minimum. In sampling unit 101' of the third embodiment, an output obtained by sampling at a D flip-flop 804 using clock Φ4 is sampled again at a D flip-flop 808 using clock Φ3. The resultant output is further sampled at a D flip-flop 812 using clock Φ2 and then sampled at a D flip-flop 816 using clock Φ1. Sampling is thus performed again and again using clocks having phases adjacent to each other, so that the time required to the next sampling is three-fourths of the one bit time and accordingly three times as long as that required in the first embodiment. Sampling in the first embodiment is carried out by two consecutive D flip-flops while four consecutive D flip-flops are used for sampling in this embodiment. In this way, the metastability is alleviated.

In the bit synchronization circuit of the third embodiment, sampling unit 101' can output stable sampled data which have no influence of metastability as discussed above.

### Fourth Embodiment

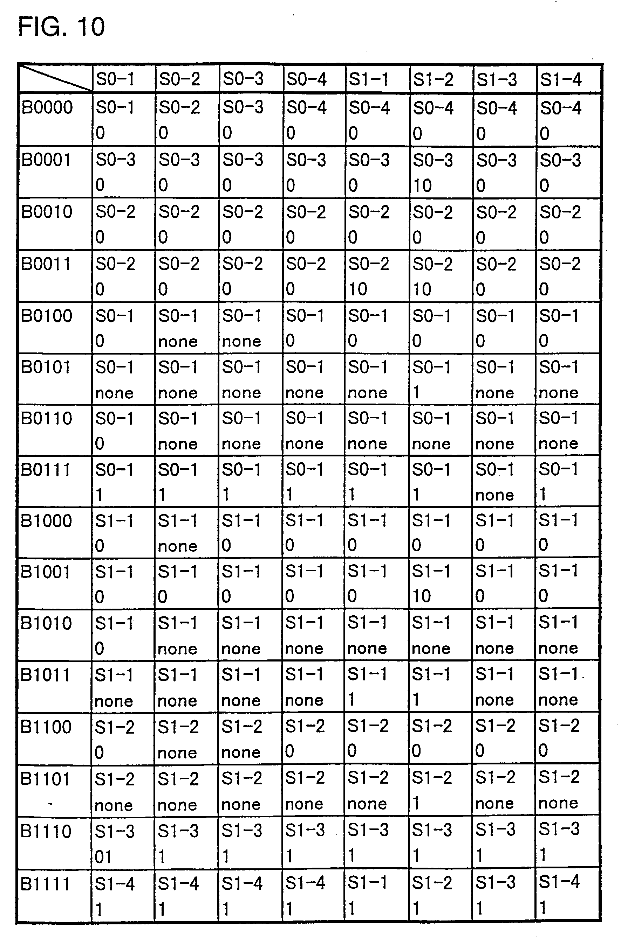

The fourth embodiment is different from the first embodiment only in that state machine 102 is replaced with a state machine according to the transition table as shown in Fig. 10. The state machine in the fourth embodiment is denoted by 102' for the purpose of description.

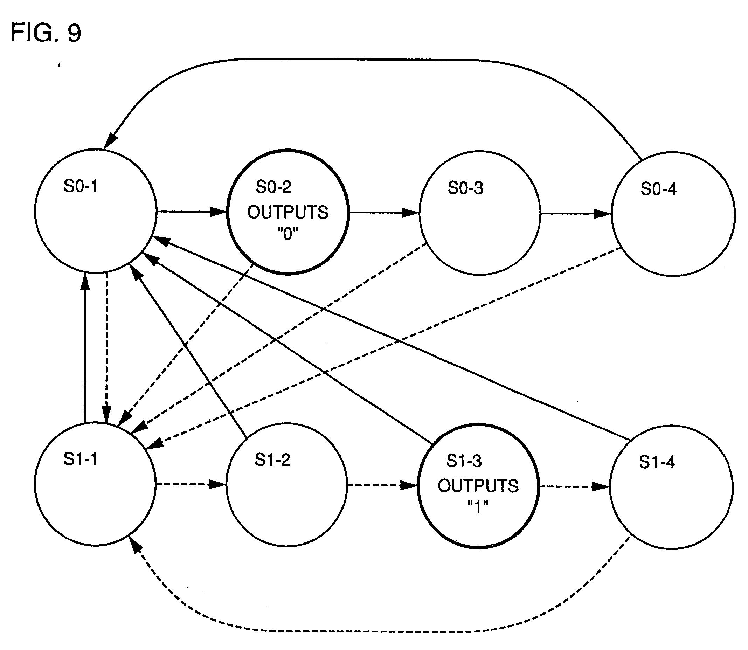

Fig. 9 illustrates a principle of the operation of state machine 102'. Unlike the operation shown in Fig. 5, if transition is made from "0" to "1," data "1" is output when the following two samples have the value "1." If transition is made from "1" to "0," data "0" is output when following one sample has the value "0." Consequently, bit "0" is regarded as "0" by two samples and bit "1" is regarded as "1" by three samples. Accordingly, correct bit synchronization is achieved even if a received signal does not have original pulse widths as shown in Fig. 1.

A noise pulse, for example, which occurs when only one sample has a different value can be eliminated by inserting a sampled data waveform shaping circuit between sampling unit 101 and state machine 102'.

In the bit synchronization circuit of the fourth embodiment, correct synchronization with a received signal is achieved even if the pulse widths of a received signal is inconstant as described above.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A bit synchronization circuit used in a receiver circuit for serial communication, comprising:
a sampling unit (101) which performs oversampling of a received signal at a sampling rate higher than bit rate to output result of the sampling in parallel at a rate lower than said sampling rate; and
a state machine (102) which determines and outputs the number of bits and content of received data based on sampled data output from said sampling unit (101) and internal state.

2. The bit synchronization circuit according to claim 1, further comprising a synchronous FIFO (703) which stores the content of the received data according to the number of bits of the received data output from said state machine (102).

3. The bit synchronization circuit according to claim 1, wherein
said sampling unit (101) performs oversampling of said received signal by using a group of multi-phase clocks having frequency of at most said bit rate and respective phases shifted from each other.

4. The bit synchronization circuit according to claim 3, wherein
said sampling unit (101) includes:
a first group of D flip-flops (301 to 304) to which said received signal is input and which receives clocks having frequency of at most said bit rate and respective phases shifted from each other to operate; and
a second group of D flip-flops (305 to 308) to which output signals of said first group of D flip-flops are respectively input, receiving a clock of the same phase to operate.

5. The bit synchronization circuit according to claim 3, wherein
said sampling unit (101) includes a plurality of shift registers (801 to 816) with a first stage to which said received signal and the group of multi-phase clocks having frequency of at most said bit rate and respective phases shifted from each other are input, an intermediate stage sampling said received signal at timings gradually shifted by the group of multi-phase clocks and a last stage sampling by using a clock of the same phase.

6. The bit synchronization circuit according to claim 1, wherein
said state machine (102) operates at a cycle which is equal to that of said bit rate and its state makes transition relative to each bit of the sampled data output in parallel by said sampling unit (101).

7. The bit synchronization circuit according to claim 1, wherein
said state machine (102) operates at a cycle which is lower than that of said bit rate and its state makes transition relative to the sampled data of multi-bit output in parallel by said sampling unit (101).

8. The bit synchronization circuit according to claim 1, wherein
said state machine (102) determines the number of bits and content of said received data based on a state transition table in which a condition that "0" is output as received data and a condition that "1" is output as received data are symmetrical to each other.

9. The bit synchronization circuit according to claim 1, wherein
said state machine (102) determines the number of bits and content of said received data based on a state transition table in which a condition that "0" is output as received data and a condition that "1" is output as received data are asymmetrical to each other.

10. A bit synchronization method used in a receiver circuit for serial communication comprising the steps of:
performing oversampling of a received signal at a sampling rate higher than bit rate;
outputting in parallel result of said sampling at a rate lower than said sampling rate; and
determining and outputting the number of bits and content of received data based on said result of said sampling output in parallel and internal state.

11. The bit synchronization method according to claim 10, further comprising the step of storing the content of the received data according to the output number of bits of the received data.

12. The bit synchronization method according to claim 10, wherein
said step of performing oversampling of a received signal at a rate higher than bit rate includes the step of performing oversampling by using a group of multi-phase clocks having frequency of at most said bit rate and respective phases shifted from each other.

13. The bit synchronization method according to claim 10, wherein
said step of determining and outputting the number of bits and content of received data includes the step of operating at a cycle equal to that of said bit rate to make transition of state relative to each bit of said result of said sampling output in parallel.

14. The bit synchronization method according to claim 10, wherein
said step of determining and outputting the number of bits and content of received data includes the step of operating at a cycle lower than that of said bit rate to make transition of state relative to said result of said sampling of multi-bit output in parallel.

15. The bit synchronization method according to claim 10, wherein
said step of determining and outputting the number of bits and content of received data includes the step of determining the number of bits and content of received data based on a state transition table in which a condition that "0" is output as received data and a condition that "1" is output as received data are symmetrical to each other.

16. The bit synchronization method according to claim 10, wherein
said step of determining and outputting the number of bits and content of received data includes the step of determining the number of bits and content of received data based on a state transition table in which a condition that "0" is output as received data and a condition that "1" is output as received data are asymmetrical to each other.
